# EUROPÄISCHE PATENTSCHRIFT

(11) **EP 3 247 742 B1**
(45) Veröffentlichungstag und Bekanntmachung des Hinweises auf die Patenterteilung: **16.12.2020**
(21) Anmeldenummer: 16700838.2
(22) Anmeldetag: 18.01.2016
(51) Int. Cl.: C08K 5/02, C08K 5/42

(54) **FLAMMGESCHÜTZTE FORMMASSEN ENTHALTEND SILOXAN-HALTIGES POLYCARBONAT-BLOCKCOKONDENSAT**
SILOXANE-CONTAINING POLYCARBONATE BLOCK COCONDENSATE CONTAINING FLAME-RETARDANT MOULDING MASSES
MASSES DE FORMAGES IGNIFUGES, CONTENANT UN CO-CONDENSAT SÉQUENCÉ DE POLYCARBONATE CONTENANT DU SILOXANE

(30) Priorität: 20.01.2015 EP 15151810
(43) Veröffentlichungstag der Anmeldung: 29.11.2017
(73) Patentinhaber: Covestro Intellectual Property GmbH & Co. KG, 51373 Leverkusen (DE)
(72) Erfinder: MEYER, Alexander, 40489 Düsseldorf (DE); HORN, Klaus, 41540 Dormagen (DE); KUHLMANN, Timo, 42799 Leichlingen (DE); LIESENFELDER, Ulrich, 51469 Bergisch Gladbach (DE)
(74) Vertreter: Levpat
(86) Internationale Anmeldenummer: PCT/EP2016/050876
(87) Internationale Veröffentlichungsnummer: WO 2016/116395

(56) Entgegenhaltungen:
- DE-A1-102008 019 503
- US-A- 6 066 700
- US-A1- 2008 081 884
- US-A1- 2008 081 893
- US-A1- 2013 224 462
- US-A1- 2013 267 665
- US-A1- 2014 226 342

## Beschreibung

Die vorliegende Erfindung betrifft flammgeschützte Formmassen enthaltend Siloxan-haltiges Polycarbonat-Blockcokondensat sowie ein Verfahren zur Herstellung derartiger Formmassen. Die Erfindung betrifft ferner die Verwendung dieser flammgeschützte Formmassen in Spritzguss- und Extrusionsanwendungen.

Es ist bekannt, dass Polysiloxan-Polycarbonat-Blockcokondensate gute Eigenschaften bezüglich der Tieftemperaturschlagzähigkeit bzw. Tieftemperaturkerbschlagzähigkeit, der Chemikalienbeständigkeit und Außenbewitterungsbeständigkeit sowie der Alterungseigenschaften und Flammbeständigkeit aufweisen. Sie sind in diesen Eigenschaften z.T. den herkömmlichen Polycarbonaten (Homopolycarbonat auf Bisphenol-A Basis) überlegen.

Diese Cokondensate werden ausgehend von den Monomeren industriell zumeist über das Phasengrenzflächenverfahren mit Phosgen hergestellt. Ferner ist die Herstellung dieser Siloxan-Cokondensate über das Schmelzeumesterungsverfahren unter Einsatz von Diphenylcarbonat bekannt. Diese Verfahren haben den Nachteil, dass die dazu verwendeten industriellen Anlagen zur Herstellung von Standard-Polycarbonat verwendet werden und deshalb eine große Anlagengröße aufweisen. Die Herstellung spezieller Blockcokondensate ist auf diesen Anlagen wegen des geringeren Volumens dieser Produkte ökonomisch oft nicht sinnvoll. Ferner können die zur Herstellung der Cokondensate benötigten Einsatzstoffe, wie z.B. der Polydimethylsiloxane, die Anlage beeinträchtigen, da sie zu Verschmutzung der Anlage oder der Lösungsmittelkreisläufe führen können. Außerdem werden zur Herstellung giftige Einsatzstoffe wie Phosgen benötigt oder erfordern wie im Schmelzeumesterungsverfahren einen hohen Energiebedarf.

Die Darstellung von Polysiloxan-Polycarbonat-Blockcopolymeren über das Phasengrenzflächenverfahren ist literaturbekannt und beispielsweise in US-PS 3 189 662, US-PS 3 419 634, DE-OS 3 34 782 und EP 122 535 beschrieben.

Die Herstellung von Polysiloxan-Polyorgano-Blockcopolymeren unter Verwendung von Hydroxyaryloxy-funktionellen Siloxanen ist aus US 2013/0267665 bekannt.

Die Darstellung von Polysiloxancarbonat-Blockcopolymeren nach dem Schmelzumesterungsverfahren aus Bisphenol, Diarylcarbonat, silanolendterminierten Polysiloxanen und Katalysator, ist in der US 5 227 449 beschrieben. Als Siloxanverbindungen werden dabei Polydiphenyl- bzw. Polydimethylsiloxan-Telomere mit Silanolendgruppen verwendet. Bekannt ist jedoch, dass derartige Dimethylsiloxane mit Silanolendgruppen im sauren oder basischen Medium mit abnehmender Kettenlänge, im Gegensatz zu Diphenylsiloxan mit Silanolendgruppen, zunehmend zur Selbstkondensation neigen, so dass ein Einbau in das entstehende Copolymer dadurch erschwert ist. Dabei gebildete cyclische Siloxane verbleiben im Polymer und wirken ausserordentlich störend bei Anwendungen im Elektrik-/Elektronikbereich.

Nachteilig bei allen diesen Verfahren ist die Verwendung von organischen Lösungsmitteln in mindestens einem Schritt der Synthese der Silicon-Polycarbonat- Blockcopolymeren, die Verwendung von Phosgen als Einsatzstoff oder die ungenügende Qualität des Cokondensats. Insbesondere ist die Synthese der Cokondensate ausgehend von den Monomeren sowohl im Phasengrenzflächenverfahren wie auch vor allem im Schmelzeumesterungsverfahren sehr aufwändig. So müssen z.B. bei Schmelzeverfahren ein geringes Vakuum und geringe Temperaturen angewendet werden, um ein Verdampfen und damit Entfernen der Monomere zu verhindern. Erst in späteren Reaktionsstufen, in denen sich Oligomere mit höherer Molmasse gebildet haben, können niedrigere Drücke und höhere Temperaturen angewendet werden. Dies bedeutet, dass die Reaktion über mehrere Stufen geführt werden muss und die Reaktionszeiten damit entsprechend lang sind.

Um die oben beschriebenen Nachteile zu vermeiden, sind auch Verfahren bekannt, die von kommerziellen Polycarbonaten ausgehen. Dies ist z.B. in US 5414054, US 5821321 und US 6,066,700 beschrieben. Hier wird ein herkömmliches Polycarbonat mit einem speziellen Polydimethylsiloxan in einem Reaktivextrusionsverfahren umgesetzt. Nachteilig an diesen Verfahren ist der Einsatz von hochwirksamen Umesterungskatalysatoren, welche die Herstellung der Cokondensate innerhalb kurzer Verweilzeiten auf einem Extruder ermöglichen. Diese Umesterungskatalysatoren verbleiben im Produkt und können nicht oder nur ungenügend inaktiviert werden. Deshalb weisen Spritzgusskörper aus den so hergestellten Cokondensaten ein ungenügendes Alterungsverhalten, insbesondere ein ungenügendes Thermoalterungsverhalten auf. Ferner müssen spezielle und damit teure Siloxanblöcke eingesetzt werden.

In der DE 19710081 wird ein Verfahren zur Herstellung der genannten Cokondensate in einem Schmelzeumesterungsprozess ausgehend von einem Oligocarbonat und einem speziellen Hydroxyarylsiloxan beschrieben. Auch die Herstellung des Oligocarbonats ist in dieser Anmeldung beschrieben. Allerdings ist die großtechnische Darstellung von Oligocarbonaten zur Herstellung relativ kleinvolumiger spezieller Cokondensate sehr aufwändig. Diese Oligocarbonate weisen relativ niedrige Molekulargewichte und relativ hohe OH-Endgruppenkonzentrationen auf. Häufig weisen diese Oligocarbonate aufgrund ihrer geringen Kettenlänge phenolische OH-Konzentrationen oberhalb von 1000 ppm auf. Derartige Produkte sind kommerziell normalerweise nicht zugänglich und müssten deshalb speziell für die Herstellung der Cokondensate produziert werden. Es ist allerdings nicht wirtschaftlich, großindustrielle Anlagen mit der Produktion kleinvolumiger Vorprodukte zu betreiben. Ferner sind derartige Vorprodukte aufgrund der in diesen Produkten enthaltenen Verunreinigungen wie z.B. Restlösemittel, Restkatalysatoren, nicht reagierte Monomere etc. deutlich reaktiver als hochmolekulare handelsübliche Produkte auf Polycarbonatbasis. Aus diesen Gründen sind entsprechende Vorprodukte oder aromatische Oligocarbonate, die sich für die Herstellung derartiger Blockcokondensate eignen, kommerziell nicht erhältlich. Ferner erlaubt das in DE 19710081 dargestellte Verfahren nicht, dass Blockcokondensat in kurzen Reaktionszeiten darzustellen. Sowohl die Herstellung des Oligocarbonats als auch die Herstellung des Blockcokondensats erfolgt über mehrere Stufen mit Verweilzeiten von insgesamt deutlich über einer Stunde. Desweiteren ist das resultierende Material nicht für die Herstellung von Cokondensaten geeignet, da die hohe Konzentration an OH-Endgruppen sowie sonstige Verunreinigungen, wie z.B. Katalysatorrestbestandteile, zu einer schlechten Farbe im Endprodukt führen.

Polycarbonatzusammensetzungen enthaltend Siloxan-haltige Polycarbonat-Blockcokondensate mit guten Flammschutzeigenschaften sind in der Literatur beschrieben, beispielsweise in US 2013/0224462, US 2008/081893, US 2014/226342 und US 2008/081884.

Die US 4994510 beschreibt Siloxan-haltige Blockcokondensate aus Polycarbonat, welche sich durch gute Flammschutzeigenschaften auszeichnen. Die US 4994510 beschreibt den Einsatz bestimmter Sulfonate als Flammschutzmittel. Die in dieser Anmeldung beschriebenen Blockcokondensat-Zusammensetzungen sind nicht Gegenstand der vorliegenden Anmeldung.

In der US 6323280 werden Zusammensetzungen aus Siloxan-haltigem Blockcokondensat und bestimmten fluorierten Polyolefinen beschrieben. Diese Zusammensetzungen sind nicht Gegenstand der vorliegenden Anmeldung.

Die EP 0524731 beschreibt Copolycarbonate enthaltend spezielle Siloxaneinheiten. Diese speziellen Strukturen sind nicht Gegenstand der vorliegenden Anmeldung.

In der US 20070191519 werden Mischungen aus Siloxan-haltigen Blockcokondensaten und verschiedenen Salzen beschrieben. Diese speziellen Mischungen sind nicht Gegenstand der vorliegenden Anmeldung.

Die vorstehend im Stand der Technik genannten Formmassen bestehen aus Siloxan-haltigen Blockcokondensaten, welche im Phasengrenzflächenverfahren erzeugt wurden. Demgegenüber sind Blockcokondensate spezieller Struktur, welche über herkömmlich zugängliche Polycarbonate erzeugt wurden, Gegenstand der vorliegenden Anmeldung.

Bei Nodera et al. in J. Appl. Pol. Sci. 2006, 102, 1697-1705 ist beschrieben, dass die Siloxandomänengröße einen großen Einfluss auf das Brandverhalten Siloxan-haltiger Blockcokondensate hat. Die von Nodera et al untersuchten Blockcokondensate werden ebenso wie die oben im Stand der Technik zitierten Materialien nach dem Phasengrenzflächenverfahren hergestellt. Die im Schmelzeumesterungsverfahren erzeugten Blockcokondensate, welche ausgehend von kommerziell verfügbaren Polycarbonate hergestellt wurden, weisen andere Siloxan-Domänenverteilungen auf, als die im Phasengrenzflächenverfahren erzeugten Materialien. Deshalb war es nicht naheliegend, dass die in der vorliegenden Anmeldung verwendeten - im Schmelzeumesterungsverfahren erzeugten - Blockcokondensate gute Brandeigenschaften aufweisen.

Ausgehend vom geschilderten Stand der Technik bestand daher die Aufgabe, kostengünstige Formmassen auf Basis Siloxan-haltiger Blockcokondensate herzustellen, die sich durch eine hohe Flammwidrigkeit und hohe Schlagzähigkeit auszeichnen. Kostengünstig meint in diesem Fall, dass die Blockcokondensate nicht über das Phasengrenzflächenverfahren, d.h. unter Einsatz von Phosgen und nicht ausgehend von den Monomeren wie Bisphenol A und Diphenylcarbonat hergestellt werden sollen. Die erfindungsgemäßen Blockcokondensate sollen sich beispielsweise ausgehend von prinzipiell handelsüblichen Polycarbonaten herstellen lassen.

Aufgabe der vorliegenden Erfindung war es ferner, Polycarbonatzusammensetzungen mit einer Kombination aus hoher Zähigkeit bei tiefen Temperaturen (z.B. zähes Verhalten bei -30 °C im Izod-Kerbschlagversuch; die Energieaufnahme im Izod-Kerbschlagversuch nach ISO 180 / 1A an 80 x 10 x 3 mm bzw. an 80 x 10 x 4 mm Stäben soll dabei mindestens 30 kJ/m² betragen) und einer Flammwidrigkeit von UL 94 V-0 bei 1,5 mm Wandstärke zur Verfügung zu stellen.

Überraschenderweise konnte gezeigt werden, dass Siloxan-haltige Blockcokondensate hergestellt nach einem Schmelzeumesterungsprozess, welche eine bestimmte Konzentration an PTFE /PTFE-Blend und einem Polysulfonsäure-Salz aufweisen und durch einen bestimmten Chlorgehalt gekennzeichnet sind, sich durch eine hohe Flammwidrigkeit in Kombination mit ausgezeichneter Tieftemperaturschlagzähigkeit auszeichnen.

Gegenstand der Erfindung sind somit flammwidrige, thermoplastische Formmassen enthaltend
(A) wenigstens ein Polysiloxan-Polycarbonat-Blockcokondensat umfassend Siloxanblöcke der Struktur (1) 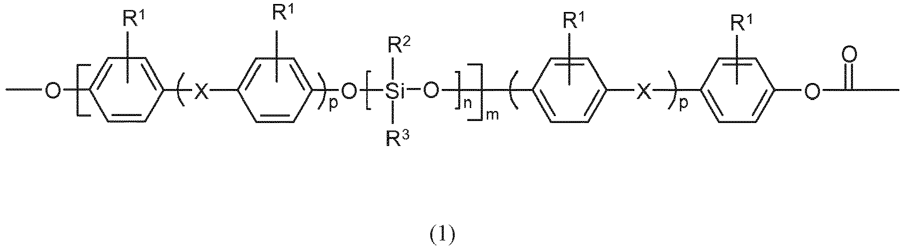 wobei
   R¹ für H, Cl, Br oder C₁ bis C₄-Alkyl, bevorzugt H oder Methyl, besonders bevorzugt H, steht,
   R² und R³ unabhängig voneinander ausgewählt sind aus Aryl, C₁ bis C₁₀-Alkyl und C₁ bis C₁₀-Alkylaryl, vorzugsweise sind R² und R³ Methyl,
   X für eine Einfachbindung, -CO-, -O-, C₁- bis C₆-Alkylen, C₂ bis C₅-Alkyliden, C₅ bis C₁₂-Cycloalkyliden oder C₆ bis C₁₂-Arylen, welches mit einem weiteren aromatischen Ring enthaltend Heteroatome kondensiert sein kann, bevorzugt für eine Einfachbindung, -CO-, -O-, C₁- bis C₅-Alkylen, C₂ bis C₅-Alkyliden oder C₅ bis C₁₂-Cycloalkyliden, besonders bevorzugt für eine Einfachbindung, -O-, Isopropyliden oder C₅ bis C₁₂-Cycloalkyliden, und insbesondere bevorzugt für Isopropyliden steht,
   n für eine durchschnittliche Anzahl von Wiederholungseinheiten von 1 bis 500, bevorzugt 10 bis 400, besonders bevorzugt 10 bis 100, ganz besonders bevorzugt 20 bis 60 steht,
   m für eine durchschnittliche Anzahl von Wiederholungseinheiten von 1 bis 10, bevorzugt 1 bis 6, besonders bevorzugt 2 bis 5 steht, und
   p für 0 oder 1, bevorzugt für 0 steht,
   und das Produkt von n mal m vorzugsweise eine Zahl zwischen 12 und 400, besonders bevorzugt 15 und 200 ist;
(B) 0,03 bis 0,25 Gew.-%, bevorzugt 0,05 bis 0,20 Gew.-%, Polytetrafluorethylen
   oder 0,05 bis 0,30 Gew.-% Polytetrafluorethylen-Blends, welche 30 bis 70 Gew.-% Polytetrafluorethylen enthalten, und
(C) 0,1 bis 0,6 Gew.-% wenigstens eines Sulfonsäuresalzes,
   dadurch gekennzeichnet, dass die Formmassen einen Chlorgehalt von 10 bis 1000 ppm, bevorzugt 20 bis 800 ppm, und insbesondere bevorzugt von 50 bis 500 ppm, aufweisen.
   Die erfindungsgemäßen Formmassen können ferner
(D) 0,00 Gew.-% bis 20,00 Gew.-%, bevorzugt 0,05 Gew.-% bis 10,00 Gew.-%, besonders bevorzugt 0,10 Gew.-% bis 1,00 Gew.-%, ganz besonders bevorzugt 0,10 Gew.-% bis 0,50 Gew.-% und insbesondere bevorzugt 0,10 Gew.-% bis 0,30 Gew.-%, mindestens eines UV- Absorbers; und/oder
(E) 0,00 Gew.-% bis 1,00 Gew.-%, bevorzugt 0,10 Gew.-% bis 0,75 Gew.-%, besonders bevorzugt 0,15 Gew.-% bis 0,60 Gew.-%, und ganz besonders bevorzugt 0,20 Gew.-% bis 0,50 Gew.-% mindestens eines Entformungsmittels; und/oder
(F) 0,00 Gew.-% bis 0,20 Gew.-%, bevorzugt 0,01 Gew.-% bis 0,10 Gew.-%, eines oder mehrerer Thermo- bzw. Verarbeitungsstabilisatoren, bevorzugt ausgewählt aus der Gruppe der Phosphate, Phosphine, Phosphite und phenolischen Antioxidantien sowie deren Mischungen; und/oder
(G) 0,00 bis 10,00 Gew. -%, bevorzugt 0,10 bis 8,00 Gew.-%, besonders bevorzugt 0,20 bis 3,00 Gew.-% weiterer Additive, welche sich von den Komponenten (B) bis (F) unterscheiden, vorzugsweise umfassend wenigstens ein Chlor-haltiges Farbmittel; und/oder
(H) 0,00 bis 40 Gew.-% eines oder mehrerer (Co)-Polycarbonate, welche keine Siloxaneinheiten aufweisen, vorzugsweise umfassend ein Homopolycarbonat basierend auf Bisphenol A,
enthalten.

Die erfindungsgemäßen Formmassen können zusätzlich zu den Komponenten (A) bis (C) und ggf. einer oder mehrerer der Komponenten (D) bis (H) eine oder mehrere weitere Komponenten enthalten.

In einer bevorzugten Ausführungsform bestehen die Formmassen aus den Komponenten (A) bis (G).

In einer anderen bevorzugten Ausführungsform bestehen die Formmassen aus den Komponenten A) bis H).

Um den erfindungsgemäßen Effekt zu erreichen, sind mindestens die Komponenten A) bis C) und die Einhaltung des Chlorgehalts nötig.

### Definitionen

"C₁-C₄-Alkyl" steht im Rahmen der Erfindung beispielsweise für Methyl, Ethyl, n-Propyl, iso-Propyl, n-Butyl, sec.-Butyl, tert.-Butyl, C₁-C₆-Alkyl darüber hinaus beispielsweise für n-Pentyl, 1-Methylbutyl, 2-Methylbutyl, 3-Methylbutyl, neo-Pentyl, 1-Ethylpropyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, "C₁-C₁₀-Alkyl" darüber hinaus beispielsweise für n-Heptyl und n-Octyl, Pinakyl, n-Nonyl, n-Decyl, C₁-C₃₄-Alkyl darüber hinaus beispielsweise für n-Dodecyl, n-Tridecyl, n-Tetradecyl, n-Hexadecyl oder n-Octadecyl.

Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

"Aryl" steht für einen carbocyclischen aromatischen Rest mit 6 bis 34 Gerüstkohlenstoffatomen. Gleiches gilt für den aromatischen Teil eines Arylallcylrestes, auch Aralkylrest genannt, sowie für Arylbestandteile komplexerer Gruppen, wie z.B. Arylcarbonylresten. Beispiele für "C₆-C₃₄-Aryl" sind Phenyl, o-, p-, m-Tolyl, Naphthyl, Phenanthrenyl, Anthracenyl oder Fluorenyl.

"Arylalkyl" bzw. "Aralkyl" bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

Im Rahmen der vorliegenden Erfindung beziehen sich die angegebenen Gew.-% der Komponenten (A) bis (H) - soweit nicht explizit anders angegeben - jeweils auf das Gesamtgewicht der Formmasse.

Ferner können in der vorliegenden Erfindung genannte bevorzugte Ausführungsformen miteinander kombiniert werden und sind nicht ausschließlich als alleinstehende Modifikation anzusehen.

### Komponente (A)

Die erfindungsgemäßen Formmassen enthalten als Komponente (A) wenigstens ein Polysiloxan-Polycarbonat-Blockcokondensat umfassend Siloxanblöcke der Struktur (1) und Polycarbonatblöcke.

Insbesondere bevorzugt für die Siloxanblöcke sind Strukturen der Formel (1), in der R² und R³ für Methyl stehen. Ferner sind Strukturen der Formel (1) besonders bevorzugt, in denen R¹ für H, p für 1 und X für Isopropyliden stehen.

Vorzugsweise weisen die im Blockcokondensat enthaltenen Polycarbonatblöcke Struktureinheiten auf, die sich von einem Diphenol der allgemeinen Formel (2) ableiten:

HO-Z-OH (2)

wobei Z ein aromatischer Rest mit 6 bis 30 C-Atomen ist, der einen oder mehrere aromatische Kerne enthalten kann, substituiert sein kann und aliphatische Reste bzw. Alkylaryle oder Heteroatome als Brückenglieder enthalten kann.

Bevorzugt steht Z in Formel (2) für einen Rest der Formel (2a) 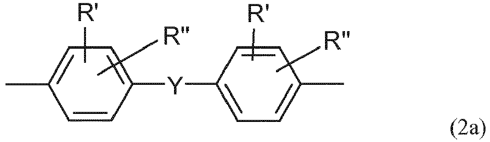 in der
R' und R" unabhängig voneinander für H, C₁-C₁₈-Alkyl, C₁-C₁₈-Alkoxy, Halogen wie Cl oder Br oder für jeweils gegebenenfalls substituiertes Aryl oder Aralkyl, bevorzugt für H oder C₁-C₁₂-Alkyl, besonders bevorzugt für H oder C₁-C₈-Alkyl und ganz besonders bevorzugt für H oder Methyl stehen, und
Y für -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht.

Bevorzugt steht Y für C₁ bis C₅-Alkylen, C₂ bis C₅-Alkyliden, -O-, -SO-, -CO-, -S-, -SO₂-, Isopropyliden oder Sauerstoff, insbesondere für Isopropyliden.

Geeignete Diphenole der Formel (2) sind beispielsweise Hydrochinon, Resorcin, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Ferner bevorzugte Diphenole der Formel (2) sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan und 1,3-Bis-[2-(3,5-dimethyl-4-hydroxyphenyl)-2-propyl]-benzol.

Besonders bevorzugte Diphenole der Formel (2) sind 2,2-Bis-(4-hydroxyphenyl)-propan (BPA), und 2,2-Bis-(3 -methyl, 4-hydroxyphenyl)-propan.

Die erfindungsgemäß als Komponente (A) vorliegenden Polysiloxan-Polycarbonat-Blockcokondensate können hergestellt werden, indem Hydroxyaryloxy-terminierten Siloxane der Formel (3) 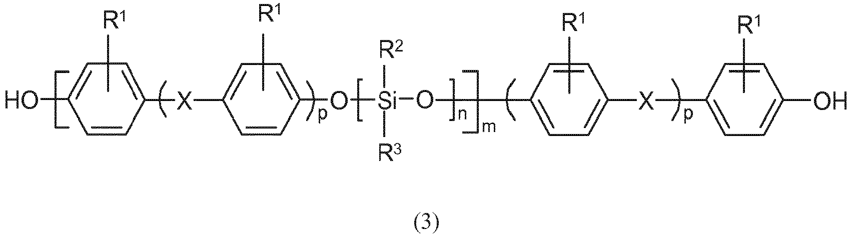 in der R¹, R² und R³, X, n, m und p die bereits für die Formel (1) angegebene Bedeutung haben, mit herkömmlichen aromatischen Polycarbonaten in der Schmelze bei Temperaturen von 280 °C bis 400 °C, vorzugsweise von 300 °C bis 390 °C, weiter bevorzugt von 320 °C bis 380 °C und ganz besonders bevorzugt von 330 °C bis 370 °C und Drücken von 0,001 mbar bis 50 mbar bevorzugt 0,005 mbar bis 40 mbar, insbesondere bevorzugt 0,02 bis 30 mbar und ganz besonders bevorzugt 0,03 bis 5 mbar, bevorzugt in Gegenwart eines Katalysators, umgesetzt werden.

Die Hydroxyaryloxy-terminierten Siloxane der Formel (3) können gemäß dem in US 2013/0267665 A1 beschriebenen Verfahren erhalten werden.

Zur Herstellung der erfindungsgemäß vorliegenden Polysiloxan-Polycarbonat-Blockcokondensate werden vorzugweise Siloxane der Formel (3) mit einem Molekulargewicht von 3000 bis 20.000 g/mol, besonders bevorzugt 3.500 bis 15.000 g/mol, jeweils bestimmt mittels Gelpermeationschromatographie und BPA Standard, eingesetzt.

Polycarbonate im Sinne der vorliegenden Erfindung sind sowohl Homopolycarbonate als auch Copolycarbonate (auch zusammen bezeichnet als (Co)polycarbonate). Diese können in bekannter Weise linear oder verzweigt sein. Die Herstellung der Polycarbonate kann in bekannter Weise nach dem Schmelzeumesterungsverfahren oder dem Phasengrenzflächenverfahren erfolgen.

Zur Herstellung des erfindungsgemäß vorliegenden Polysiloxan-Polycarbonat-Blockcokondensats werden vorzugsweise Polycarbonate mit Molekulargewichten von 16.000 bis 28.000 g/mol, besonders bevorzugt von 17.000 bis 27.000 g/mol und insbesondere bevorzugt von 18.000 bis 26.500 g/mol (gemessen nach BPA-Standard) eingesetzt. Vorzugweise weisen diese Polycarbonate einen Gehalt an phenolischen OH-Gruppen von 250 ppm bis 1000 ppm, bevorzugt 300 bis 900, und insbesondere bevorzugt von 350 bis 800 ppm auf.

Insbesondere werden Polycarbonate auf Basis von Bisphenol A eingesetzt. Ganz besonders bevorzugt enthalten diese Polycarbonate Phenol als Endgruppe. Dabei sind insbesondere solche Polycarbonate zur Herstellung der erfindungsgemäßen Blockcokondensate geeignet, welche nach dem Schmelzeumesterungsverfahren hergestellt wurden. Ganz besonders bevorzugt sind Polycarbonate, deren Herstellung in DE 102008019503 beschrieben ist.

In einer bevorzugten Ausführungsform der erfindungsgemäßen Formmassen weist das Polysiloxan-Polycarbonat-Blockcokondensat eine oder mehrere Umlagerungsstrukturen der Formeln (I) bis (IV) auf, 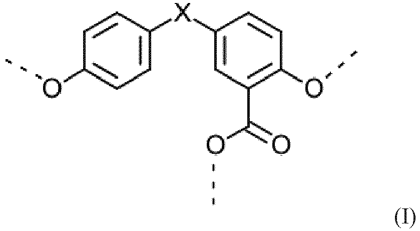 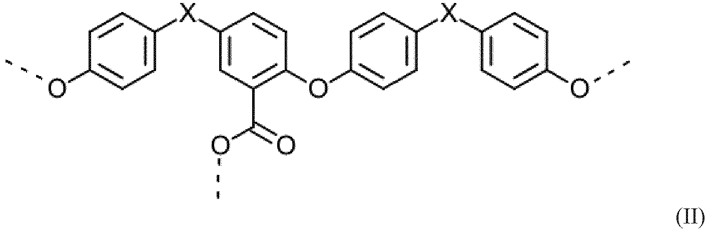 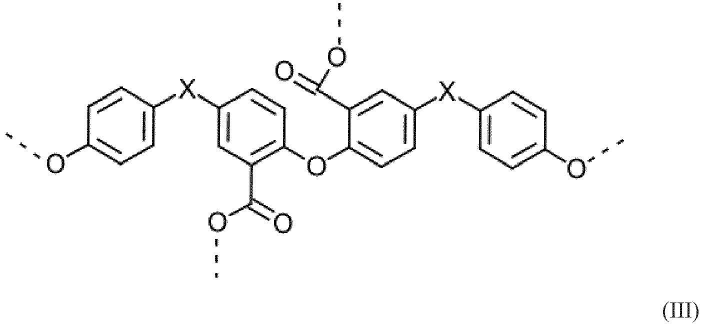 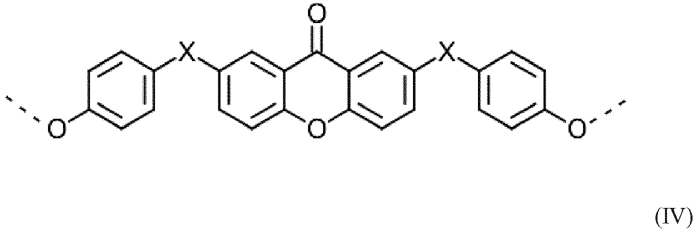 wobei
die Phenylringe unsubstituiert sind oder unabhängig voneinander ein- oder zweifach mit C₁ bis C₈-Alkyl und/oder Halogen, bevorzugt C₁ bis C₄-Alkyl, besonders bevorzugt Methyl substituiert sein können, vorzugsweise aber unsubstituiert vorliegen,
X für eine Einfachbindung, C₁ bis C₆-Alkylen, C₂ bis C₅-Alkyliden oder C₅ bis C₆-Cycloalkyliden, bevorzugt für eine Einfachbindung und C₁ bis C₄ Alkylen und insbesondere bevorzugt für Isopropyliden, steht, und
die durch --- angedeuteten Verknüpfungen in den Struktureinheiten (I) bis (IV) jeweils Teil einer Carboxylgruppe sind;
und wobei die Gesamtmenge der Struktureinheiten (I) bis (IV) vorzugsweise 50 bis 2000 ppm, besonders bevorzugt 50 bis 1000 ppm, insbesondere bevorzugt 80 bis 850 ppm (bestimmt nach Hydrolyse, bezogen auf das in der Zusammensetzung enthaltene Polycarbonat) beträgt.

Die Umlagerungsstrukturen - bzw. mindestens eine dieser Strukturen - (I) bis (IV) sind dabei in die Polymerkette des Blockcokondensats, vorzugweise in die Polycarbonatblöcke, eingebaut.

Um die Menge der Umlagerungsstrukturen zu bestimmen, wird das jeweilige Blockcokondensat einer Totalverseifung unterzogen und so die entsprechenden Abbauprodukte der Formeln (Ia) bis (IVa) gebildet, deren Menge mit HPLC bestimmt wird. (Dies kann z.B. wie folgt geschehen: Die Polycarbonatprobe wird mittels Natriummethylat unter Rückfluss verseift. Die entsprechende Lösung wird angesäuert und zur Trockne eingeengt. Der Trocknungsrückstand wird in Acetonitril gelöst und die phenolischen Verbindungen der Formel (Ia) bis (IVa) mittels HPLC mit UV-Detektion bestimmt.

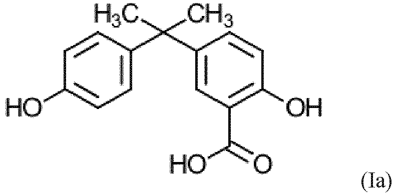

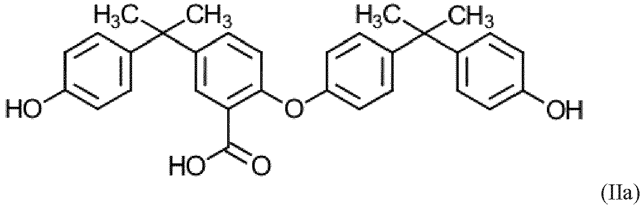

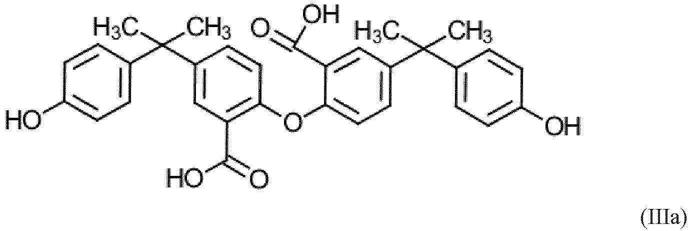

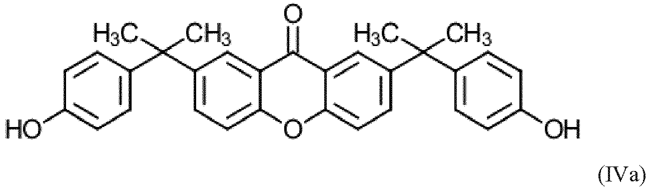

Bevorzugt beträgt die Menge der dabei freigesetzten Verbindung der Formel (Ia) 20 bis 800 ppm besonders bevorzugt 25 bis 700 ppm und insbesondere bevorzugt 30 bis 500 ppm.

Bevorzugt beträgt die Menge der dabei freigesetzten Verbindung der Formel (IIa) 0 (d.h. unterhalb der Nachweisgrenze von 10 ppm) bis 100 ppm besonders bevorzugt 0 bis 80 ppm und insbesondere bevorzugt 0 bis 50 ppm.

Bevorzugt beträgt die Menge der dabei freigesetzten Verbindung der Formel (IIIa) 0 (d.h. unterhalb der Nachweisgrenze von 10 ppm) bis 800 ppm weiter bevorzugt 10 bis 700 ppm und besonders bevorzugt 20 bis 600 ppm sowie ganz besonders bevorzugt 30 bis 350 ppm.

Bevorzugt beträgt die Menge der dabei freigesetzten Verbindung der Formel (IVa) 0 (d.h. unterhalb der Nachweisgrenze von 10 ppm) bis 300 ppm bevorzugt 5 bis 250 ppm und insbesondere bevorzugt 10 bis 200 ppm.

Aus Gründen der Vereinfachung wird die Menge der Strukturen der Formeln (I) bis (IV) mit der Menge der freigesetzten Verbindungen der Formeln (Ia) bis (IVa) gleichgesetzt.

Die Herstellung von Polycarbonaten enthaltend die Strukturenelemente (I) bis (IV) ist aus DE 102008019503 bekannt.

Vorzugsweise weist das erfindungsgemäß vorliegende Polysiloxan-Polycarbonat-Blockcokondensat eine relative Lösungsviskosität von 1,26 bis 1,40, besonders bevorzugt 1,27 bis 1,38, und ganz besonders bevorzugt 1,28 bis 1,35, bestimmt durch Messung der relativen Lösungsviskosität in Dichlormethan bei einer Konzentration von 5 g/l bei 25 °C mit einem Ubbelohdeviskosimeter, auf.

Vorzugsweise weist das erfindungsgemäß vorliegende Polysiloxan-Polycarbonat-Blockcokondensat ein gewichtsmittleres Molekulargewicht von 26.000 bis 40.000 g/mol, besonders bevorzugt 27.000 bis 38.000 g/mol, und ganz besonders bevorzugt 28.000 bis 35.000 g/mol, jeweils bestimmt durch Messung der relativen Lösungsviskosität in Dichlormethan bei einer Konzentration von 5 g/l bei 25 °C mit einem Ubbelohdeviskosimeter, auf.

Vorzugsweise beträgt die Menge an Polysiloxan-Polycarbonat-Blockcokondensat in den erfindungsgemäßen Formmassen mindestens 50 Gew.-%, besonders bevorzugt mindestens 60 Gew.-%, ganz besonders bevorzugt mindestens 75 Gew.-%.

Vorzugsweise beträgt der Gehalt an Siloxanblöcken der Struktur (1) 2 bis 20 % Gew.-%, bezogen auf das Gesamtgewicht der Formmassen.

Die Werte für n und m in den Siloxanblöcken der Struktur (1) lassen sich mit Hilfe von ¹H-NMR- bzw. ²⁹Si NMR-Spektroskopie bestimmen.

### Komponente (B)

Die erfindungsgemäßen Formmassen enthalten als Komponente (B) Polytetrafluorethylen (PTFE) oder Polytetrafluorethylen-Blends (PTFE-Blends), welche 30 bis 70 Gew.-% Polytetrafluorethylen (bezogen auf den PTFE-Blend) enthalten.

Geeignete PTFE-Blends im Sinne der Erfindung sind alle physikalischen Mischungen von PTFE mit einer Schichtsubstanz welche die PTFE Ketten umhüllt und mit Polycarbonat bzw. Polyestercarbonat und PTFE verträglich ist und die Fibrillenstruktur der PTFE-Ketten innerhalb der Umhüllung unverändert lässt. Geeignete Substanzen sind beispielsweise Polyvinylderivate, bevorzugt Styrolacrylnitril (SAN) und Polyacrylate. In diesen Blends liegt PTFE in Anteilen von 30 bis 70 Gew.-%, bevorzugt von 40-60 Gew. %, besonders bevorzugt von 40 bis 55 Gew. % vor. Solche Blends sind kommerziell erhältlich beispielsweise unter den Handelsnamen Blendex^{(R)} B449 (ca. 50% PTFE und ca. 50 % SAN [aus 80 % Styrol und 20 % Acrylnitril]) der Firma Chemtura oder Metablen^{(R)} A-3800 (ca. 40% PTFE CAS 9002-84-0 und ca. 60 % Methylmethacrylat/Butylacrylat Copolymer CAS 25852-37-3) von Misubishi Rayon. Die Präparation der Blends erfolgt durch die Vermischung einer PTFE-Emulsion mit einer Emulsion des geeigneten Blendpartners. Aus der erhaltenen Mischung wird durch ein geeignetes Verfahren wie Coagulation, Gefriertrocknung, Sprühtrocknung u. s. w. der Blend gewonnen. Erfindungsgemäß werden PTFE-Blends in einer Menge von 0,05 bis 0,30 Gew.-%, bezogen auf die Formmasse, eingesetzt.

Reines PTFE wird in Pulverform in einer Menge von 0,03 bis 0,25 Gew.-%, bevorzugt 0,05 bis 0,20 Gew.-%, bezogen auf das Gesamtgewicht der Formmasse, eingesetzt. Geeignete, in Pulverform einsetzbare Tetrafluorethylenpolymerisate weisen vorzugsweise einen mittleren Teilchendurchmesser von 100 bis 1000 µm und Dichten von 2,0 g/ cm³ bis 2,3 g/ cm³ auf. Geeignete Polytetrafluorethylen - Pulver sind handelsübliche Produkte und werden beispielsweise von der Fa. DuPont unter dem Handelsnamen Teflon^{(R)} angeboten.

### Komponente (C)

Die erfindungsgemäßen Formmassen enthalten als Komponente (C) ein oder mehrere Sulfonsäuresalze.

Bevorzugt sind die Alkali- und Erdalkalimetallsalze der organischen Sulfonsäuren, wie beispielsweise Diphenylsulfon-3 -sulfonsäure, Diphenylsulfon-3,3'-disulfonsäure, Naphthalintrisulfonsäure, para-Toluolsulfonsäure, 2,5-Dichlorbenzolsulfonsäure und 2,4,5-Trichlorbenzolsulfonsäure.

Geeignete Sulfonsäuresalze sind insbesondere solche der allgemeinen Formeln (4) und (5): 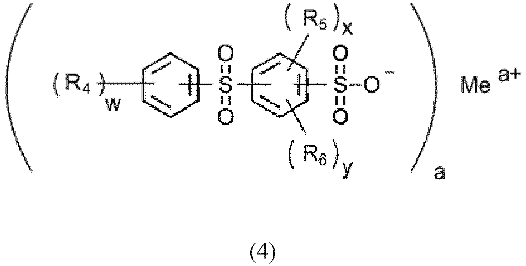 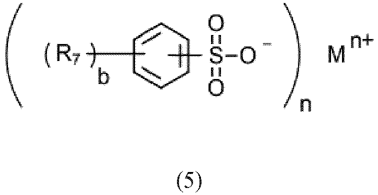 wobei
R₄, R₅, R₆ und R₇ jeweils unabhängig voneinander für einen C₁ bis C₆-Alkylrest stehen, insbesondere bevorzugt ausgewählt aus der Gruppe bestehend aus Methyl, Ethyl, Propyl und Butyl;
Me und M jeweils für ein Metall, bevorzugt Natrium oder Kalium, stehen;
a und n für 1, 2 oder 3 stehen,
b und w ganze Zahlen von 0 bis 5 sind, und
x und y für ganze Zahlen von 0 bis 4 stehen.

Besonders bevorzugte Sulfonsäuresalze der Formeln (4) und (5) sind Diphenylsulfonsulfonat-Kaliumsalz und Natrium-p-toluolsulfonat (p-Toluolsulfonsäure-Natriumsalz).

### Komponente (D)

In einer bevorzugten Ausführungsform enthalten die erfindungsgemäßen Formmassen als Komponente (D) ein oder mehrere UV-Absorber.

Geeignete UV-Absorber sind beispielsweisein der EP 1 308 084 A1, in der DE 102007011069 A1 sowie in der DE 10311063 A1 beschrieben.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, BASF SE, Ludwigshafen), 2-(2'-Hydroxy-5'-(tert.-octyl)-phenyl)-benzotriazol (Tinuvin® 329, BASF SE, Ludwigshafen), 2-(2'-Hydroxy-3'-(2-butyl)-5'-(tert.butyl)-phenyl)-benzotriazol (Tinuvin® 350, BASF SE, Ludwigshafen), Bis-(3-(2H-benztriazolyl)-2-hydroxy-5-tert.-octyl)methan, (Tinuvin® 360, BASF SE, Ludwigshafen), (2-(4,6-diphenyl-1,3,5-triazin-2-yl)-5-(hexyloxy)-phenol (Tinuvin® 1577, BASF SE, Ludwigshafen), sowie der Benzophenone 2,4-Dihydroxy-benzophenon (Chimasorb® 22 , BASF SE, Ludwigshafen) und 2-Hydroxy-4-(octyloxy)-benzophenon (Chimassorb® 81, Ciba, Basel), 2-Propensäure, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF SE Ludwigshafen), 2-[2-hydroxy-4-(2-ethylhexyl)oxy]phenyl-4,6-di(4-phenyl)phenyl-1,3,5-triazin (Tinuvine 1600, BASF SE, Ludwigshafen) oder Tetra-ethyl-2,2'-(1,4-phenylene-dimethylidene)-bismalonat (Hostavin® B-Cap, Clariant AG). Es können auch Mischungen dieser Ultraviolett-Absorber eingesetzt werden.

Insbesondere bevorzugte UV-Absorber sind 2-(2'-Hydroxy-5'-(tert.-octyl)-phenyl)-benzotriazol (Tinuvin® 329, BASF SE, Ludwigshafen), Bis-(3-(2H-benztriazolyl)-2-hydroxy-5-tert.-octyl)methan, (Tinuvin® 360, BASF SE, Ludwigshafen) und 2-(3',5'-Bis-(1,1-dimethylbenzyl)-2'-hydroxy-phenyl)-benzotriazol (Tinuvin® 234, BASF SE, Ludwigshafen), wobei Bis-(1,1-dimethylbenzyl)-2'-hydroxyphenyl)-benzotriazol ganz besonders bevorzugt ist.

Die UV-Absorber werden vorzugsweise in einer Menge von 0,05 Gew.-% bis 10,00 Gew.-%, besonders bevorzugt 0,10 Gew.-% bis 1,00 Gew.-%, ganz besonders bevorzugt 0,10 Gew.-% bis 0,50 Gew.-% und insbesondere bevorzugt 0,10 Gew.-% bis 0,30 Gew.-%, in den erfindungsgemäßen Formmassen eingesetzt.

### Komponente (E)

In einer weiteren bevorzugten Ausführungsform enthalten die erfindungsgemäßen Formmassen als Komponente (E) ein oder mehrere Entformungsmittel.

Als Entformungsmittel eignen sich Ester aliphatischer langkettiger Carbonsäuren mit ein- oder mehrwertigen aliphatischen und/oder aromatischen Hydroxy-Verbindungen.

Besonders bevorzugt verwendete aliphatische Carbonsäureester sind Verbindungen der allgemeinen Formel (6):

(R⁸-C(=O)-O)ₒ-R⁹-(OH)ₚ (6)

wobei
o für eine Zahl von 1 bis 4 steht,
p für eine Zahl von 0 bis 3 steht,
R⁸ ein aliphatischer, gesättigter oder ungesättigter, linearer, cyclischer oder verzweigter Alkylrest, vorzugsweise C₁₂-C₃₀-Alkylrest, ist und
R⁹ ein Alkylenrest, vorzugsweise C₂-C₂₀-Alkylenrest, eines 1- bis 4-wertigen aliphatischen Alkohols R⁹-(OH)ₒ₊ₚ ist.

Bei Estern von mehrwertigen Alkoholen können auch freie, nicht veresterte OH-Gruppen vorhanden sein.

Erfindungsgemäß geeignete aliphatische Carbonsäureester sind z.B.: Glycerinmonostearat, Palmitylpalmitat und Stearylstearat. Es können auch Gemische verschiedener Carbonsäureester der Formel (6) eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und Gemische daraus. Besonders bevorzugt sind Pentaerythrittetrastearat, Stearylstearat und Propandioldistearat bzw. Gemische daraus und am stärksten bevorzugt Pentaerythrittetrastearat.

Erfindungsgemäß geeignete aliphatische Carbonsäureester sind beispielsweise Glycerinmonostearat, Palmitylpalmitat und Stearylstearat. Es können auch Gemische verschiedener Carbonsäureester eingesetzt werden. Bevorzugt verwendete Carbonsäureester sind Ester von Pentaerythrit, Glycerin, Trimethylolpropan, Propandiol, Stearylalkohol, Cetylalkohol oder Myristylalkohol mit Myristin-, Palmitin-, Stearin- oder Montansäure und deren Gemische.

Besonders bevorzugt sind Pentaerythrittetrastearat, Stearylstearat und Propandioldistearat, und deren Gemische. Ganz besonders bevorzugt ist Pentaerythrittetrastearat.

Die Entformungsmittel werden vorzugsweise in Konzentrationen von 0,00 Gew.-% bis 1,00 Gew.-%, bevorzugt 0,10 Gew.-% bis 0,75 Gew.-%, besonders bevorzugt 0,15 Gew.-% bis 0,60 Gew.-%, und ganz besonders bevorzugt 0,20 Gew.-% bis 0,50 Gew.-%, bezogen auf das Gewicht der Formmasse, verwendet.

### Komponente (F)

In einer weiteren bevorzugten Ausführungsform enthalten die erfindungsgemäßen Formmassen als Komponente (F) ein oder mehrere Thermo- und/oder Verarbeitungsstabilisatoren, vorzugsweise ausgewählt aus der Gruppe der Phosphate, Phosphine, Phosphite und phenolischen Antioxidantien sowie deren Mischungen. Diese werden vorzugsweise in einer Menge von 0,01 Gew.-% bis 0,10 Gew.-%, bezogen auf das Gewicht der Formmassen, eingesetzt.

Geeignete Thermostabilisatoren sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)-pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butyl)phenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1 ,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)-pentaerythritol-diphosphit, Triphenylphosphin (TPP), Trialkylphenylphosphin, Bisdiphenylphosphinoethan und Trinaphthylphosphin.

Insbesondere bevorzugt werden Triphenylphosphin (TPP), Irgafos® 168 (Tris(2,4-di-tert-butylphenyl)-phosphit) und Tris(nonylphenyl)phosphit oder deren Mischungen eingesetzt.

Als Thermostabilisatoren können ferner phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

Ferner können Verarbeitungsstabilisatoren auf Phosphatbasis eingesetzt werden. Das Phosphat hat dabei bevorzugt die folgende Struktur (7) 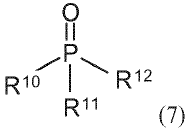 wobei R¹⁰, R¹¹ und R¹² unabhängig voneinander für H, gleiche oder unterschiedliche lineare, verzweigte oder zyklische Alkylreste, vorzugsweise C₁-C₁₈-Alkylreste, stehen können.

Geeignete Phosphate sind z. B. Mono-, Di- und Trihexylphosphat, Triisooctylphosphat und Trinonylphosphat.

Bevorzugt wird als Phosphat Triisooctylphosphat (Tris-2-ethyl-hexyl-phosphat) verwendet. Es können auch Mischungen aus verschiedenen Mono-, Di- und Trialkylphosphaten verwendet werden.

Die Phosphate können optional in Mengen von weniger als 0,05 Gew.-%, bevorzugt von 0,00005 Gew.-% bis 0,05 Gew.-%, besonders bevorzugt 0,0002 bis 0,05 Gew.-%, ganz besonders bevorzugt von 0,0005 Gew.-% bis 0,03 Gew.-% und insbesondere von 0,001 bis 0,0120 Gew.-%, bezogen auf das Gesamtgewicht der Formmasse, eingesetzt werden.

### Komponente (G)

Die erfindungsgemäßen Formmassen können weitere Additive, vorzugsweise in Mengen von 0,10 bis 8,00 Gew.-%, besonders bevorzugt 0,20 bis 3,00 Gew.-% enthalten.

Bei den weiteren Additiven handelt es sich um übliche Polymeradditive, wie z.B. die in EP-A 0 839 623, WO-A 96/15102, EP-A 0 500 496 oder "Plastics Additives Handbook", Hans Zweifel, 5th Edition 2000, Hanser Verlag, München beschriebenen Flammschutzmittel, optische Aufheller, Fließverbesserer, anorganischen Pigmente, Farbmittel, Entformungsmittel oder Verarbeitungshilfsmittel. Die bereits als Komponenten (A) bis (F) der vorliegenden Erfindung offenbarten Substanzen sind in diesem Zusammenhang ausdrücklich nicht Bestandteil der Komponente (G).

Im Rahmen der Komponente (G) können weitere Flammschutzmittel eingesetzt werden. Derartige Flammschutzmittel die gegebenenfalls in den erfindungsgemaessen Formmassen verwendet werden können, sind beispielsweise: Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliummethylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium- oder Kalium-2,4-dichlorbenzoat, Lithium-phenylphosphonat, Natrium- oder Kalium-2-formylbenzolsulfonat, Natrium- oder Kalium-(N-benzolsulfonyl)-benzolsulfonamid, Trinatrium- oder Trikalium-hexafluoroaluminat, Dinatrium- oder Dikalium-hexafluorotitanat, Dinatrium- oder Dikalium-hexafluorosilikat, Dinatrium- oder Dikalium-hexafluorozirkonat, Natrium- oder Kalium-pyrophosphat, Natrium- oder Kaliummetaphosphat, Natrium- oder Kalium-tetrafluoroborat, Natrium- oder Kalium-hexafluorophosphat, Natrium- oder Kalium- oder Lithiumphosphat, N-(p-tolylsulfonyl)-p-toluolsulfimid-Kaliumsalz, N-(N'-Benzylaminocarbonyl)-sulfanylimid-Kaliumsalz. Ebenfalls können Mischungen der genannten Salze eingesetzt werden.

Im Rahmen der Komponente (G) enthalten die Formmassen vorzugsweise ein oder mehrere Farbmittel, vorzugsweise umfassend wenigstens ein Chlor-haltiges Farbmittel.

"Farbmittel" im Sinne der Erfindung sind sowohl Farbstoffe als auch Pigmente.

Geeignete Farbmittel sind beispielsweise Schwefel-haltige Pigmente wie Cadmium Red and Cadmium Gelb, Eisencyanid basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen basiertes Braun, Titan-Cobalt basiertes Grün, Cobaltblau, Kupfer-Chrom basiertes Schwarz und Kupfer-Eisen basiertes Schwarz oder Chrom-basierte Pigmente wie Chromgelb, Phthalocyanin-abgeleitete Farbstoffe wie KupferPhthalocyanin Blau und Kupfer Phthalocyanin Grün, kondensierte polycyclische Farbstoffe und Pigmente wie Azo-basierende (z.B. Nickel-Azogelb), Schwefel-Indigo-Farbstoffe, Perinon-basierte, Perylen-basierte, Chinacridon-abgeleitete, Dioxazin-basierte, Isoindolinon-basierte und Chinophthalon-abgeleitete Derivate, Anthrachinon-basierte, heterocyclische Systeme.

Konkrete Beispiele für Handelsprodukte sind z.B. MACROLEX® Blau RR, MACROLEX® Violett 3R, MACROLEX® Violett B (Lanxess AG, Deutschland), Sumiplast® Violett RR, Sumiplast® Violett B, Sumiplast® Blau OR, (Sumitomo Chemical Co., Ltd.), Diaresin® Violett D, Diaresin® Blau G, Diaresin® Blau N (Mitsubishi Chemical Corporation), Heliogen® Blau oder Heliogen® Grün (BASF SE, Deutschland).

Von diesen sind Cyaninderivate, Chinolinderivate, Anthrachinonderivate, Phthalocyaninderivate und Perinonderivate bevorzugt.

Im Rahmen der Komponente (G) können chlorierte Lösungsmittel eingesetzt werden. Als chlorierte Lösungsmittel eignen sich chlorierte Halogenalkane und halogenierte Aromaten.

### Komponente (H)

Die erfindungsgemäßen Formmassen können ferner als Komponente (H) ein oder mehrere (Co)-Polycarbonate, welche keine Siloxaneinheiten aufweisen, enthalten.

Hierfür eignen sich sowohl Homopolycarbonate als auch Copolycarbonate. Diese können in bekannter Weise linear oder verzweigt sein. Die Herstellung der Polycarbonate kann in bekannter Weise nach dem Schmelzeumesterungsverfahren oder dem Phasengrenzflächenverfahren erfolgen.

Besonders bevorzugt sind Homo- und Copolycarbonate mit Struktureinheiten, die sich von einem die sich von einem oder mehreren Diphenolen der allgemeinen Formel (2), insbesondere der allgemeinen Formel (2a), und ganz besonders bevorzugt Bisphenol A, ableiten, so wie sie bereits im Zusammenhang mit der Komponente (A) beschrieben wurden.

Ganz besonders bevorzugt sind Homopolycarbonate basierend auf Bisphenol A.

### Chlorgehalt

Erfindungsgemäß weisen die erfindungsgemäßen Formmassen einen Chlorgehalt von 10 bis 1000 ppm, bevorzugt 20 bis 800 ppm, und insbesondere bevorzugt von 50 bis 500 ppm, auf.

Überraschenderweise wurde festgestellt, dass die erfindungsgemäßen Formmassen einen solchen Chlorgehalt aufweisen müssen, um gleichzeitig ein gutes Brandverhalten und eine ausgezeichnete Tieftemperaturschlagzähigkeit zu zeigen.

Der Chlorgehalt kann über verschiedenen Maßnahmen eingestellt werden.

So sind beispielsweise Chlor-haltige Flammschutzmittel verfügbar. Der Einsatz derartiger Verbindungen ist jedoch nicht bevorzugt.

Der Chlorgehalt kann auch durch bestimmte Chlor-haltige Salze verändert werden.

In einer bevorzugten Ausführungsform der erfindungsgemäßen Formmassen wird der Chlorgehalt über ein im Rahmen der Komponente (G) enthaltenes Chlor-haltiges Farbmittel eingestellt.

So kann der Chlorgehalt über ein im Rahmen der Komponente (G) enthaltenes Chlor-haltiges Pigment wie z.B. Chlor-haltiges Titandioxid eingestellt werden. Ein derart bevorzugtes Pigment ist Titandioxid, welches nach dem Chloridverfahren hergestellt wurde. Dieses wird vorzugsweise in einer Menge von 0,20 bis 8,00 Gew.-%, bezogen auf die Formmasse, eingesetzt.

So kann der Chlorgehalt weiterhin über im Rahmen der Komponente (G) enthaltene Chlor-haltige Farbmittel, insbesondere Chloraromaten wie Pigment Grün 7 (ein Polychlorkupferphthalocyanin; ein Chlorhaltiger Phtahlocyaninfarbstoff) oder Solvent Red 135 (8,9,10,11-Tetrachloro-12h-phthaloperin-12-on; ein Chlor-haltiger Perinonfarbstoff) eingestellt werden. Chloraromaten werden vorzugsweise in einer Menge von 0,01 bis 0,50 Gew.-%, bezogen auf die Formmasse, eingesetzt.

Ferner kann der Chlorgehalt über im Rahmen der Komponente (G) enthaltene chlorierte Lösungsmittelanteile in den Formmassen verändert werden. Derartige Lösungsmittel sind z.B. chlorierte Halogenalkane oder halogenierte Aromaten.

### Herstellung der Formmassen

Die Herstellung der erfindungsgemäßen Formmassen enthaltend die Komponenten (A) bis (C) und ggf. eine oder mehrere der Komponenten (D) bis (H) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgen das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Formmassen durch bekannte Verfahren oder als Masterbatch eingebracht werden.

In diesem Zusammenhang können die einzelnen Komponenten der Formmassen in üblichen Vorrichtungen wie Schneckenextrudern (zum Beispiel Zweischneckenextruder, ZSK), Knetern, Brabender- oder Banbury-Mühlen zusammengeführt und vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Formmassen können zu Erzeugnissen oder Formkörpern verarbeitet werden, in dem man beispielsweise die Formmassen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Formmassen können in diesem Zusammenhang beispielsweise durch Heißpressen, Spinnen, Blasformen, Tiefziehen, Extrudieren oder Spritzgiessen in Erzeugnisse oder Formkörper, geformte Gegenstände wie Spielzeugteile, Fasern, Folien, Bändchen, Platten wie Massivplatten, Stegplatten, Doppelstegplatten oder Wellplatten, Gefäße, Rohre oder sonstige Profile, überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten (Mehrschichtsysteme) können durch (Co)extrusion, Direct Skinning, Direct Coating, Insert Moulding, Folienhinterspritzen, oder sonstige dem Fachmann bekannte geeignete Verfahren hergestellt werden.

Zur Extrusion wird die gegebenenfalls z.B. mittels Trocknung vorbehandelte Formmasse dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Zusammensetzung notwendigen Temperaturen eingestellt, wobei üblicherweise den Herstellerangaben gefolgt werden kann. Enthalten die Formmassen beispielsweise Polycarbonate mit hoher Schmelzeviskosität, so werden diese normalerweise bei Schmelzetemperaturen von 260 °C bis 350 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast: "Kunststoff-Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Mit den oben beschriebenen thermoplastischen Substraten lassen sich Formkörper auch durch Spritzguss herstellen. Die Verfahren hierzu sind bekannt und im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Spritzgiessen ist ein Umformverfahren, welches in der Kunststoffverarbeitung eingesetzt wird.

Mit diesem Verfahren lassen sich wirtschaftlich direkt verwendbare Formteile in großer Stückzahl herstellen. Dazu wird mit einer Spritzgießmaschine der jeweilige Werkstoff, beziehungsweise die Formmasse, in einer Spritzeinheit plastifiziert und in ein Spritzgießwerkzeug eingespritzt. Der Hohlraum, die Kavität, des Werkzeugs bestimmt die Form und die Oberflächenstruktur des fertigen Bauteils.

Spritzguss umfasst hier alle Spritzgießverfahren einschließlich Mehrkomponentenspritzguss und Spritzprägeverfahren.

Zur Herstellung von Kunststoffformteilen werden die in der Kunststoffverarbeitung bekannten Spritzguss- und Spritzprägevarianten eingesetzt. Herkömmliche Spritzgussverfahren ohne Spritzprägetechnik werden insbesondere für die Herstellung von kleineren Spritzgiessteilen verwendet, bei welchen kurze Fliesswege auftreten und mit moderaten Spritzdrücken gearbeitet werden kann. Beim herkömmlichen Spritzgussverfahren wird die Kunststoffmasse in eine zwischen zwei geschlossenen lagefesten Formplatten ausgebildete Kavität eingespritzt und verfestigt sich dort.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrösserte Kavität vorhanden. Tauchkanten des Werkzeuges garantieren auch bei etwas geöffneten Formplatten noch eine ausreichende Dichtigkeit der vorvergrösserten Kavität. Die Kunststoffmasse wird in diese vorvergrösserte Kavität eingespritzt und währenddessen bzw. anschliessend unter Ausführung einer Werkzeugbewegung in Schliessrichtung verpresst. Insbesondere bei der Herstellung von grossflächigen und dünnwandigen Formteilen mit langen Fliesswegen ist die aufwändigere Spritzprägetechnik bevorzugt oder ggf. zwingend erforderlich. Nur auf diese Weise wird eine Reduzierung der bei grossen Formteilen benötigten Spritzdrücke erreicht. Ferner können Spannungen bzw. Verzug im Spritzgiessteil, welche infolge hoher Spritzdrücke auftreten, durch Spritzprägen vermieden werden. Dies ist besonders bei der Herstellung von optischen Kunststoffanwendungen, wie beispielsweise Verscheibung (Fenster) in Kraftfahrzeugen, wichtig, da bei optischen Kunststoffanwendungen erhöhte Anforderungen an die Spannungsfreiheit einzuhalten sind.

Erfindungsgemäß bevorzugte Erzeugnisse, Formkörper oder geformte Gegenstände sind Platten, Folien, Rohre, Verscheibungen, beispielsweise Autofenster, Fenster von Schienen- und Luftfahrzeugen, Autosonnendächer, Sicherheitsscheiben, Bedachungen oder Gebäudeverglasungen, Lampenabdeckungen für den Innenraumbereich von Fahrzeugen und Gebäuden, Lampenabdeckungen für den Außenbereich wie z.B. Abdeckungen von Straßenlaternen, Visiere, Brillen, Extrusions- und Lösungsfolien für Displays oder Elektromotoren, auch Skifolien, Ampelgehäuse, Ampelabdeckungen, Ampellinsen, die die erfindungsgemäßen Formmassen enthalten. Dabei können neben Massivplatten auch Doppelstegplatten oder Multistegplatten verwendet werden. Als weitere Komponenten der erfindungsgemäßen Erzeugnisse neben den erfindungsgemäßen Formmassen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Formmassen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

### Beispiele:

Materialien zur Herstellung der Zusammensetzungen und entsprechenden Probekörper:

### Komponente (A)

Polysiloxan-Polycarbonat-Blockcokondensat (im Folgenden auch Si-PC) enthaltend Bisphenol A Homopolycarbonat-Blöcke und Siloxanblöcke der allgemeinen Formel (1) mit R¹ = H, R², R³ = Methyl, p =0, n im Bereich 30 bis 35 und m im Bereich von 3,5 bis 4,0. Die relative Lösungsviskosität des Blockcokondensats beträgt 1,30 (bestimmt bei einer Konzentration von 5 g/l in Dichlormethan bei 25°C mit einem Ubbelohde-Viskosimeter).

Das Blockcokondensat wurde nach einem Schmelzeumesterungsverfahren aus einem Bisphenol A Homopolycarbonat und einem Siloxan hergestellt. Dabei wurden die folgenden Komponenten eingesetzt:
Polycarbonat-Komponente: Lineares Bisphenol-A-Homopolycarbonat mit Endgruppen basierend auf Phenol mit einer Schmelze-Volumenrate MVR von ca. 59 cm³/10 min (gemessen bei 300 °C und 1,2 kg Belastung gemäß ISO 1033), hergestellt nach einem Schmelzeumesterungsprozess wie in DE 102008019503 beschrieben. Diese Komponente weist Umlagerungsstrukturen der Formeln (I), (II), (III) und (IV) auf. Der Gehalt an Umlagerungsstrukturen kann durch Bestimmung der Mengen der entsprechenden Abbauprodukte (Ia) bis (IVa) nach Totalverseifung mit Hilfe von Natriummethylat unter Rückfluss festgestellt werden. Es wurden die folgenden Abbauprodukte mittels HPLC mit UV-Detektion gefunden: (Ia): 142 ppm; (IIa): < 10 ppm, (IIIa): <10 ppm, (IVa): 23 ppm.
Siloxan-Komponente: Hydrochinon-terminertes Polydimethylsiloxan der Formel (I) (d.h. R¹ = H, R² = Methyl, p = 0) mit n im Bereich 30 bis 35 und m im Bereich von 3,5 bis 4,0; hergestellt wie in US 2013/0267665 A1, Beispiel 1 beschrieben.

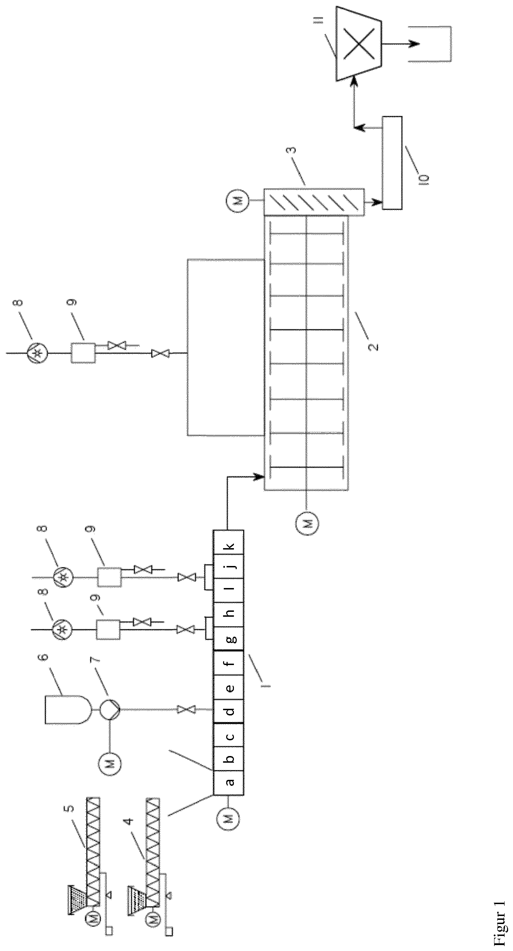

Die Herstellung des Blockcokondensats aus der Polycarbonat-Komponente und der Siloxan-Komponente erfolgt über ein Reaktivextrusionsverfahren:
Das Schema des Versuchsaufbaus ist Figur 1 zu entnehmen.

Figur 1 zeigt ein Schema zur Herstellung der Siloxan-haltigen Blockcokondensate. Polycarbonat und ein Katalysator-Masterbatch (s.u.) werden über die gravimetrischen Zuführungen (4) und (5) auf den Doppelschneckenextruder (1) dosiert. Der Extruder (Typ ZSE 27 MAXX von Fa. Leistritz Extrusionstechnik GmbH, Nürnberg) ist ein gleichsinnig drehender Zweischneckenextruder mit Vakuumzonen zur Abtrennung der Brüden. Der Extruder besteht aus 11 Gehäuseteilen (a bis k) - siehe Figur 1. Im Gehäuseteil a erfolgt die Zugabe von Polycarbonat sowie Katalysatormasterbatch sowie im Gehäuseteil b und c das Aufschmelzen dieser Komponenten. Im Gehäuseteil d erfolgt die Zugabe der flüssigen Silikonkomponente. Die Gehäuseteile e und f dienen der Einmischung der flüssigen Silikonkomponente. Die Gehäuseteile g, h, i und j sind mit Entgasungsöffnungen versehen, um die Kondensationsprodukte zu entfernen. Die Gehäuseteile g und h sind der ersten und die Gehäuseteile i und j der zweiten Vakuumstufe zugeordnet. Das Vakuum in der ersten Vakuumstufe betrug zwischen 250 und 500 mbar Absolutdruck. Das Vakuum in der zweiten Vakuumstufe beträgt weniger als 1 mbar. Das Siloxan wird in einem Tank (6) vorgelegt und über eine Dosierpumpe (7) auf den Extruder gegeben. Das Vakuum wird über 2 Vakuumpumpen (8) generiert. Die Brüden werden vom Extruder weggeführt und in 2 Kondensatoren aufgefangen (9). Die so entgaste Schmelze wird über eine Leitung vom Gehäuseteil k des Zweischneckenextruders auf einen Hochviskosreaktor (2) geführt.

Bei dem Hochviskosreaktor (2) handelt es sich um einen selbstreinigenden Apparat mit zwei gegenläufigen, horizontal und achsparallel angeordneten Rotoren. Der Aufbau ist in der europäischen Patentanmeldung EP0460466 beschrieben, siehe dort Fig.7. Die verwendete Maschine hat einen Rotordurchmesser von 187 mm bei einer Länge von 924 mm. Der gesamte Innenraum des Reaktors hat ein Volumen von 44,6 Litern. Dem Hochviskosreaktor ist ebenfalls an eine Vakuumpumpe (8) und an einen Kondensator (9) angeschlossen. Das am Hochviskosreaktor anliegende Vakuum beträgt 0,1 bis 5 mbar. Nach Abschluss der Reaktion wird das Blockcokondensat über eine Austragsschnecke abgeführt und anschließend granuliert (über Wasserbad (10) und Granulator (11)). Das Molekulargewicht des Blockcokondensats wird über den Durchsatz gesteuert. Der Durchsatz in der Extruder/Hochviskosreaktorkombination wird so eingestellt, dass sich ein Lösungsviskosität des Blockcokondensats von eta rel 1,30 ergibt (bestimmt bei einer Konzentration von 5 g/l in Dichlormethan bei 25°C mit einem Ubbelohde-Viskosimeter).

Das zur Herstellung des Blockcokondensat nötige Katalysatormasterbatch wird wie folgt hergestellt:
Der Katalysator ist Tetraphenylphosphoniumphenoxid der Firma Rhein Chemie Rheinau GmbH (Mannheim, Germany). Der Katalysator wird in Form eines Masterbatch eingesetzt. Tetraphenylphosphoniumphenoxid wird als Co-Kristall mit Phenol verwendet und enthält ca. 70% Tetraphenylphosphoniumphenoxid. Die unten genannten Gehalte beziehen sich auf das Produkt der Firma Rhein Chemie (d.h. in Form des Co-Kristalls mit Phenol).

Das Masterbatch wird in Form einer 0,25 % Verdünnung angewendet. Hierfür werden 4982 g Polycarbonat mit 18 g of Tetraphenylphosphoniumphenoxid (in oben beschriebener Form) in einem Rhönradmischer für 30 Minuten vermengt. Das Masterbatch wird im Verhältnis 1 : 10 dosiert, so dass der Katalysatorgehalt 0,025 Gew.-% bezogen auf das eingesetzte Polycarbonat beträgt.

### Komponente (B)

PTFE-Pulver CFP 6000 der Firma DuPont mit einem mittleren Teilchendurchmesser von ca. 490 µm und einer Schüttdichte von ca. 460 g/L. Blendex B449 (ca. 50% PTFE und ca. 50 % SAN [aus 80 % Styrol und 20 % Acrylnitril] der Firma Chemtura.

### Komponente (C)

Diphenylsulfonsulfonat-Kaliumsalz: Produktname KSS-FR der Firma Brenntag GmbH, Deutschland.

### Komponente (D)

Als UV-Absorber wird Tinuvin® 234 (Bis-(1,1-dimethylbenzyl)-2'-hydroxy-phenyl)-benzotriazol, BASF SE, Ludwigshafen) eingesetzt.

### Komponente (F)

Als Thermostabilisator wird Irgafos® 168 (Tris(2,4-di-tert-butyl-phenyl)-phosphit, CAS 31570-04-4, BASF SE, Ludwigshafen) eingesetzt.

### Komponente (G)

### Farbmittel

Als Farbmittel wird Ruß (Partikelgröße ca . 17 nm) in Form von Black Pearls® 800 (CAS-No. 1333-86-4) der Firma Cabot Corp. eingesetzt.

Als Farbmittel wird Macrolex Rot EG (Solvent Red 135, CAS-No. 20749-68-2) von der Firma Lanxess AG, Leverkusen, verwendet.

Als nicht erfindungsgemäßes Flammschutzmittel wird Kaliumperfluor-1-butansulfonat, kommerziell erhältlich als Bayowet® C4 der Firma Lanxess, Leverkusen, Deutschland, CAS-Nr. 29420-49-3 eingesetzt.

### Komponente (H)

Lineares Bisphenol-A-Homopolycarbonat mit Endgruppen basierend auf Phenol mit einer Schmelze-Volumenrate MVR von 6 cm³/10 min (gemessen bei 300 °C und 1,2 kg Belastung gemäß ISO 1033), nachfolgend auch als PC 1 bezeichnet.

Die Compoundierung der Additive erfolgte auf einem Zweiwellenextruder der Firma KrausMaffei Berstorff TYP ZE25 bei einer Gehäusetemperatur von 260°C bzw. einer Massetemperatur von 280°C und einer Drehzahl von 150 Upm mit den in Beispielen angegebenen Mengen an Additiven.

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 80 °C zu entsprechenden Formkörpern verarbeitet. Dabei werden die in Tabelle 1 angegebenen Einsatzstoffe in den angegebenen Konzentrationen eingesetzt.

Beispiele 1 und 2 sind erfindungsgemäße Beispiele; Beispiele 3 bis 6 sind Vergleichsbeispiele.

Die Bestimmung des Schmelzvolumenrate (MVR) erfolgt nach ISO 1133 (bei 300 °C; 1,2 kg).

Das Brandverhalten wird nach UL 94V an Stäben der Abmessung 127 mm x 12,7 mm x 3,0 mm und an Stäben der Abmessung 127 x 12,7 x 1,5 mm gemessen.

Anschließend wurden 2 Sets von je 5 UL Probekörpern der oben angegebenen Dicke analog UL 94V vermessen. Ein Set wurde nach 48 Stunden Lagerung bei 50% rel. Luftfeuchtigkeit und 23°C gemessen. Ein weiteres Set wurde nach 7 Tagen Lagerung bei 70°C im Warmluftofen gemessen. (Insgesamt wurden jeweils 10 UL Probekörper getestet.)

Die mechanischen Eigenschaften (Izod-Kerbschlag gemessen nach ISO 180 / 1A; 23 °C bzw. -30°C) werden an jeweils 10 Teststäben mit den Maßen 80 x 10 x 4 bzw. 80 x 10 x 3 mm (Dicke des Teststabs siehe Tabelle 2) bestimmt.

Die erfindungsgemäßen Beispiele 1 und 2 sowie die Vergleichsbeispiele 3 bis 6 werden mit den in Tabelle 1 angegebenen Additiven und Rohstoffen in den jeweils angegebenen Konzentrationen (in Gew.-%) unter den oben angegebenen Bedingungen hergestellt.

**Tabelle 1**

| Komponente | Beispiel 1 | Beispiel 2 | Beispiel 3 (Vergleich) | Beispiel 4 (Vergleich) | Beispiel 5 (Vergleich) | Beispiel 6 (Vergleich) |
|---|---|---|---|---|---|---|
| (A) Si-PC | 95 | 95 | 95 | 95 | 95 | 95 |
| (H) PC 1 | 3,78 | 3,85 | 3,43 | 4,08 | 3,83 | 3,83 |
| (B) Blendex | 0,15 | - | 0,60 | 0,15 | 0,40 | - |
| (B) PTFE-Pulver | - | 0,08 | - | - | - | 0,3 |
| (C) | 0,40 | 0,40 | 0,30 | 0,40 | 0,40 | 0,30 |
| (D) | 0,27 | 0,27 | 0,27 | 0,27 | 0,27 | 0,27 |
| (F) | 0,10 | 0,10 | 0,10 | 0,10 | 0,10 | 0,10 |
| G) Ruß | 0,20 | 0,20 | 0,20 | - | 0,20 | 0,20 |
| G) Macrolex Rot EG | 0,10 | 0,10 | 0,10 | - | 0,10 | - |
| G) Kaliumperfluor-1-butansulfonat | - | - | - | - | 0,10 | - |

**Tabelle 2**

| | Bsp. 1 | Bsp. 2 | Bsp. 3 (Vergleich) | Bsp. 4 (Vergleich) | Bsp. 5 (Vergleich) | Bsp. 6 (Vergleich) |
|---|---|---|---|---|---|---|
| Chlor-Gehalt (ppm) | 250 | 260 | 220 | 2 | 170 | 4 |
| Izod Kerb. 23 °C [kJ/m²] | 64 d * | 63 d * | - | 64 d * | 68 d | - |
| Izod Kerb. -30 °C [kJ/m²] | 40 d * | 43 d * | 25 b | 46 d -40°C * | 4 Teststäbe: 32 d 6 Teststäbe: 26 b | 28 b |
| UL 3,0 mm | V0 | V0 | V0 | V0 | V0 | V0 |
| UL 1,5 mm | V0 | V0 | V1 | V1 | V1 | V0 |

| | | | | | | |
|---|---|---|---|---|---|---|
| *Dicke des Teststabs im Izod-Kerbschlagversuch = 4 mm; b: Sprödbruch im Izod-Kerbschlagversuch; d: Zähes Verhalten im Izod-Kerbschlagversuch; Bei Beispiel 3, 5 und 6 Dicke des Teststabs im Izod-Kerbschlagversuch = 3 mm. | | | | | | |

Man erkennt, dass die erfindungsgemäßen Beispiele die Kombination von gutem Brandverhalten und ausgezeichneter Tieftemperaturkerbschlagzähigkeit aufweisen, wohingegen die Vergleichsbeispiele, die einen zu geringen Chlorgehalt (Beispiele 4 und 6) oder einen zu hohen Gehalt an Komponente B aufweisen (Beispiele 3 und 5), Schwächen im Brandverhalten und/oder bei den mechanischen Eigenschaften aufweisen.

## Patentansprüche

1. Flammwidrige, thermoplastische Formmassen enthaltend
(A) wenigstens ein Polysiloxan-Polycarbonat-Blockcokondensat umfassend Siloxanblöcke der Struktur (1) 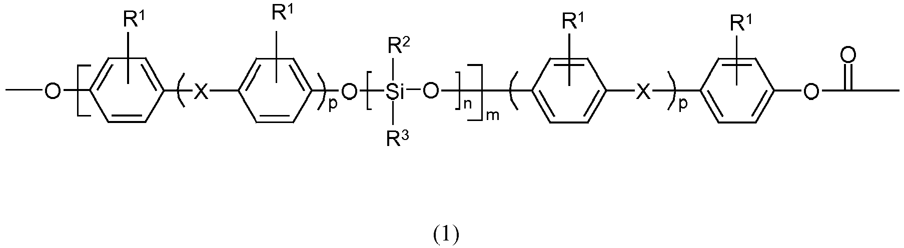 wobei
R¹ für H, Cl, Br oder C₁ bis C₄-Alkyl steht,
R² und R³ unabhängig voneinander ausgewählt sind aus Aryl, C₁ bis C₁₀-Alkyl und C₁ bis C₁₀-Alkylaryl,
X für eine Einfachbindung, -CO-, -O-, C₁- bis C₆-Alkylen, C₂ bis C₅-Alkyliden, C₅ bis C₁₂-Cycloalkyliden oder C₆ bis C₁₂-Arylen, welches mit einem weiteren aromatischen Ring enthaltend Heteroatome kondensiert sein kann, steht,
n für einen durchschnittlichen Wertahl von 1 bis 500,
m für einen durchschnittlichen Wert von 1 bis 10 und
p für 0 oder 1 steht;
(B) 0,03 bis 0,25 Gew.-% Polytetrafluorethylen
oder 0,05 bis 0,30 Gew.-% Polytetrafluorethylen-Blends, welche 30 bis 70 Gew.-% Polytetrafluorethylen enthalten, und
(C) 0,1 bis 0,6 Gew.-% wenigstens eines Sulfonsäuresalzes,
**dadurch gekennzeichnet, dass** die Formmassen einen Chlorgehalt von 10 bis 1000 ppm aufweisen.

2. Formmassen nach Anspruch 1, **dadurch gekennzeichnet, dass** ein oder mehrere Chlor-haltige Farbmittel enthalten sind.

3. Formmassen nach Anspruch 2, **dadurch gekennzeichnet, dass** die Formmassen wenigstens ein Chlor-haltiges Farbmittel aus der Klasse der Chloraromaten und/oder nach dem Chloridverfahren hergestelltes Titanoxid enthalten.

4. Formmassen nach einem der vorhergehenden Ansprüche, **dadurch gekennzeichnet, dass** die Formmassen wenigstens einen Chloraromaten ausgewählt aus den Klassen der Phtahlocyaninfarbstoffe und Perinonfarbstoffe enthalten.

5. Formmassen nach einem der vorhergehenden Ansprüche, **dadurch gekennzeichnet, dass** als Komponente (B) Polytetrafluorethylen mit einem durchschnittlichen Partikeldurchmesser von 100 bis 1000 µm vorliegt.

6. Formmassen nach einem der Ansprüche 1 bis 4, **dadurch gekennzeichnet, dass** als Komponente (B) wenigstens ein Polytetrafluorethylen-Blend in den Formmassen enthalten ist, wobei der Polytetrafluorethylen-Blend einen Polytetrafluorethylen-Kern und eine Beschichtung aus wenigstens einem Polyvinylderivat umfasst.

7. Formmassen nach einem der vorhergehenden Ansprüche, **dadurch gekennzeichnet, dass** als Komponente (C) wenigstens ein Sulfonsäuresalz der allgemeinen Formeln (4) und (5) vorliegt, 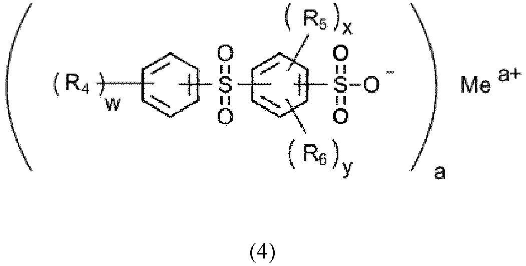 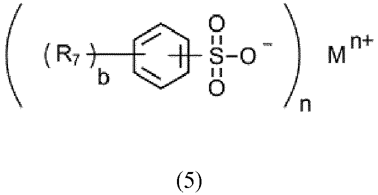 wobei
R₄, R₅, R₆ und R₇ jeweils unabhängig voneinander für einen C₁ bis C₆-Alkylrest stehen,
Me und M jeweils für ein Metall stehen,
a und n für 1, 2 oder 3 stehen,
b und w ganze Zahlen von 0 bis 5 sind, und
x und y für ganze Zahlen von 0 bis 4 stehen.

8. Formmassen nach einem der vorhergehenden Ansprüche bestehend aus den Komponenten (A), (B), (C) und
(D) 0,00 Gew.-% bis 20,00 Gew.-% eines oder mehrerer UV-Absorber;
(E) 0,00 Gew.-% bis 1,00 Gew.-% eines oder mehrerer Entformungsmittel;
(F) 0,00 Gew.-% bis 0,20 Gew.-% eines oder mehrerer Thermo- und/oder Verarbeitungsstabilisatoren;
(G) 0,00 bis 10,00 Gew. -% weiterer Additive, welche sich von den Komponenten (B) bis (F) unterscheiden; und
(H) 0,00 bis 40,00 Gew.-% eines oder mehrerer (Co)-Polycarbonate, welche keine Siloxaneinheiten aufweisen.

9. Formmassen nach einem der vorhergehenden Ansprüche, **dadurch gekennzeichnet, dass** Komponente A in einer Menge von mindestens 50 Gew.-% in den Formmassen enthalten ist.

10. Formmassen nach einem der vorhergehenden Ansprüche, **dadurch gekennzeichnet, dass** das Polysiloxan-Polycarbonat-Blockcokondensat Polycarbonatblöcke basierend auf Bisphenol A aufweist.

11. Formmassen nach einem der vorhergehenden Ansprüche, **dadurch gekennzeichnet, dass** das Polysiloxan-Polycarbonat-Blockcokondensat eine oder mehrere Strukturen der Formeln (I), (II), (III) und (IV) aufweist: 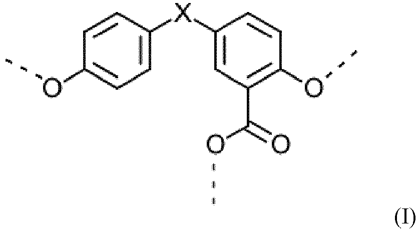 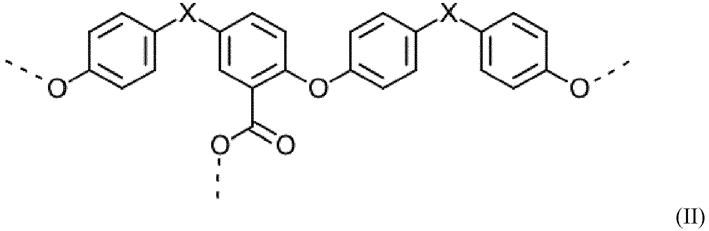 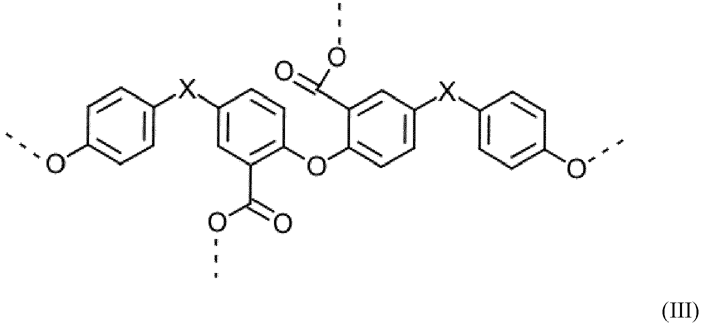 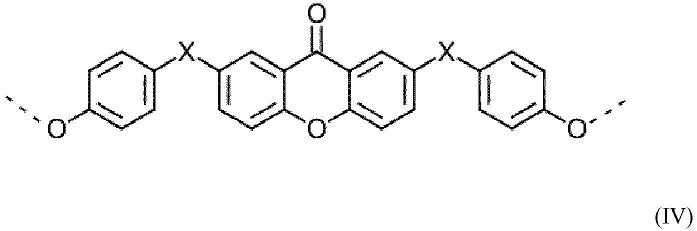 wobei
die Phenylringe unsubstituiert sind oder unabhängig voneinander mono- oder disubstituiert sind mit C₁ bis C₈-Alkyl und/oder Halogen,
X für eine Einfachbindung, C₁ bis C₆-Alkylen, C₂ bis C₅-Alkyliden oder C₅ bis C₆-Cycloalkyliden steht, und
die durch --- angedeuteten Verknüpfungen in den Struktureinheiten (I) bis (IV) jeweils Teil einer Carboxylgruppe sind.

12. Formmassen nach einem der vorhergehenden Ansprüche, **dadurch gekennzeichnet, dass** der Gehalt an Siloxanblöcken der Struktur (1) 2 bis 20 % Gew.-%, bezogen auf das Gesamtgewicht der Formmassen, beträgt.

## Claims

1. Flame-retardant, thermoplastic moulding compositions comprising
(A) at least one polysiloxane-polycarbonate block cocondensate comprising siloxane blocks of the structure (1) 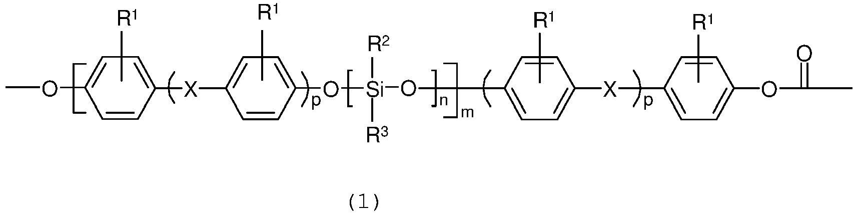 where
R¹ is H, Cl, Br or C₁ to C₄-alkyl,
R² and R³ are selected mutually independently from aryl, C₁ to C₁₀-alkyl and C₁ to C₁₀-alkylaryl,
X is a single bond, -CO-, -O-, C₁- to C₆-alkylene, C₂ to Cs-alkylidene, C₅ to C₁₂-cycloalkylidene or C₆ to C₁₂-arylene, which can have been condensed with another aromatic ring comprising heteroatoms,
n is an average value from 1 to 500,
m is an average value from 1 to 10 and
p is 0 or 1;
(B) from 0.03 to 0.25% by weight of polytetrafluoroethylene
or from 0.05 to 0.30% by weight of polytetrafluoroethylene blends which comprise from 30 to 70% by weight of polytetrafluoroethylene, and
(C) from 0.1 to 0.6% by weight of at least one sulphonic salt,
**characterized in that** the moulding compositions have a chlorine content of from 10 to 1000 ppm.

2. Moulding compositions according to Claim 1, **characterized in that** one or more chlorine-containing colorants are present.

3. Moulding compositions according to Claim 2, **characterized in that** the moulding compositions comprise at least one chlorine-containing colorant from the class of the chlorinated aromatics and/or titanium oxide prepared by the chloride process.

4. Moulding compositions according to any of the preceding claims, **characterized in that** the moulding compositions comprise at least one chlorine aromatic selected from the classes of the phthalocyanine dyes and perinone dyes.

5. Moulding compositions according to any of the preceding claims, **characterized in that** polytetrafluoroethylene with an average particle diameter from 100 to 1000 µm is present as component (B).

6. Moulding compositions according to any of Claims 1 to 4, **characterized in that** at least one polytetrafluoroethylene blend is present as component (B) in the moulding compositions, where the polytetrafluoroethylene blend comprises a polytetrafluoroethylene core and a coating made of at least one polyvinyl derivative.

7. Moulding compositions according to any of the preceding claims, **characterized in that** at least one sulphonic salt of the general formulae (4) and (5) is present as component (C) 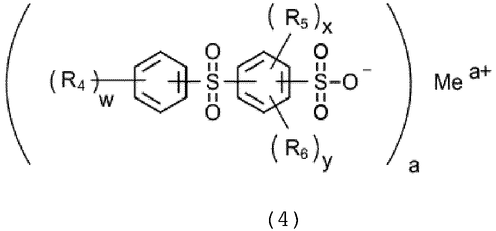 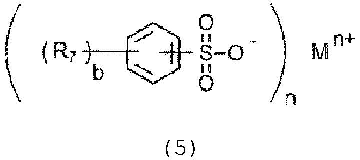 where
R₄, R₅, R₆ and R₇ are respectively mutually independently a C₁ to C₆-alkyl moiety,
Me and M are respectively a metal,
a and n are 1, 2 or 3,
b and w are integers from 0 to 5, and
x and y are integers from 0 to 4.

8. Moulding compositions according to any of the preceding claims composed of components (A), (B), (C) and
(D) from 0.00% by weight to 20.00% by weight of one or more UV absorbers;
(E) from 0.00% by weight to 1.00% by weight of one or more mould-release agents;
(F) from 0.00% by weight to 0.20% by weight of one or more heat stabilizers and/or processing stabilizers;
(G) from 0.00 to 10.00% by weight of other additives which differ from components (B) to (F); and
(H) from 0.00 to 40.00% by weight of one or more (co)polycarbonates which do not have any siloxane units.

9. Moulding compositions according to any of the preceding claims, **characterized in that** the quantity present of component A in the moulding compositions is at least 50% by weight.

10. Moulding compositions according to any of the preceding claims, **characterized in that** the polysiloxane-polycarbonate block cocondensate comprises polycarbonate blocks based on bisphenol A.

11. Moulding compositions according to any of the preceding claims, **characterized in that** the polysiloxane-polycarbonate block cocondensate comprises one or more structures of the formulae (I), (II), (III) and (IV): 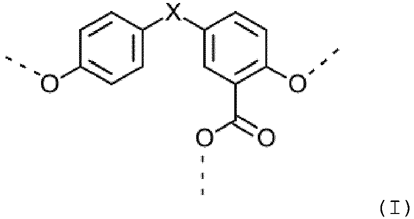 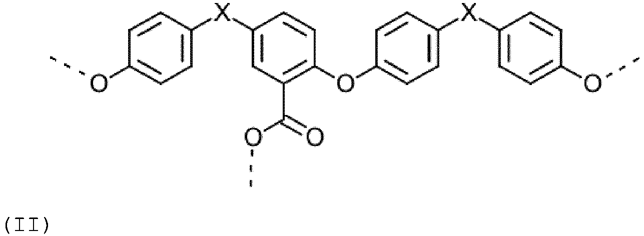 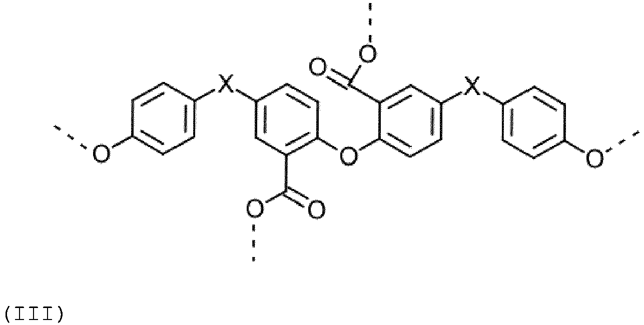 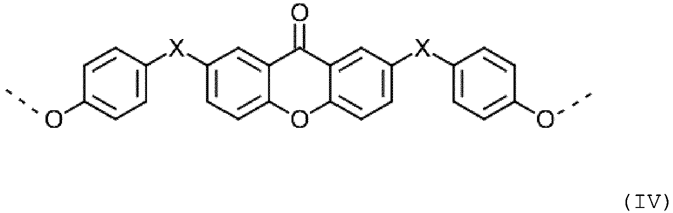 where
the phenyl rings are unsubstituted or mutually independently mono- or disubstituted with C₁ to C₈-alkyl and/or halogen,
X is a single bond, C₁ to C₆-alkylene, C₂ to Cs-alkylidene or C₅ to C₆-cycloalkylidene, and the linkages indicated by --- in the structural units (I) to (IV) are respectively part of a carboxy group.

12. Moulding compositions according to any of the preceding claims, **characterized in that** the content of siloxane blocks of the structure (1) is from 2 to 20% by weight, based on the total weight of the moulding compositions.

## Revendications

1. Masses de moulage ignifuges, thermoplastiques, contenant
(A) au moins un cocondensat à blocs polysiloxane-polycarbonate, comprenant des blocs de siloxane de structure (1) 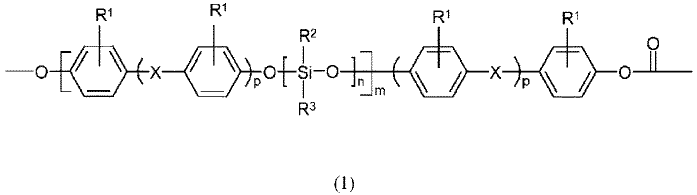 dans laquelle
R¹ représente H, Cl, Br ou C₁-C₄-alkyle,
R² et R³ sont choisis, indépendamment l'un de l'autre, parmi aryle, C₁-C₁₀-alkyle et C₁-C₁₀-alkylaryle,
X représente une simple liaison, -CO-, -O-, C₁-C₆-alkylène, C₂-C₅-alkylidène, C₅-C₁₂-cycloalkylidène ou C₆-C₁₂-arylène, qui peut être condensé avec un autre cycle aromatique contenant des hétéroatomes,
n représente une valeur moyenne 1 à 500,
m représente une valeur moyenne 1 à 10 et
p représente 0 ou 1 ;
(B) 0,03 à 0,25% en poids de polytétrafluoréthylène ou 0,05 à 0,30% en poids de mélanges à base de polytétrafluoréthylène, qui contiennent 30 à 70% en poids de polytétrafluoréthylène et
(C) 0,1 à 0,6% en poids d'au moins un sel d'acide sulfonique,
**caractérisées en ce que** les masses de moulage présentent une teneur en chlore de 10 à 1000 ppm.

2. Masses de moulage selon la revendication 1, **caractérisées en ce qu'**un ou plusieurs colorants contenant du chlore sont contenus.

3. Masses de moulage selon la revendication 2, **caractérisées en ce que** les masses de moulage contiennent au moins un colorant contenant du chlore de la classe des aromatiques chlorés et/ou de l'oxyde de titane préparé selon le procédé au chlorure.

4. Masses de moulage selon l'une quelconque des revendications précédentes, **caractérisées en ce que** les masses de moulage contiennent au moins un aromatique chloré choisi parmi les classes des colorants de type phtalocyanine et des colorants de type périnone.

5. Masses de moulage selon l'une quelconque des revendications précédentes, **caractérisées en ce que** du polytétrafluoroéthylène présentant un diamètre moyen de particule de 100 à 1000 µm est présent en tant que composant (B).

6. Masses de moulage selon l'une quelconque des revendications 1 à 4, **caractérisées en ce que** les masses de moulage contiennent, en tant que composant (B), au moins un mélange à base de polytétrafluoroéthylène, le mélange à base de polytétrafluoroéthylène comprenant un noyau de polytétrafluoroéthylène et un revêtement constitué par au moins un dérivé de polyvinyle.

7. Masses de moulage selon l'une quelconque des revendications précédentes, **caractérisées en ce qu'**au moins un sel de l'acide sulfonique des formules générales (4) et (5) est présent en tant que composant (C) 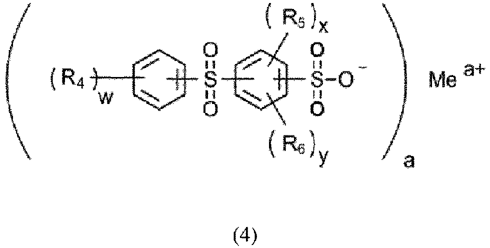 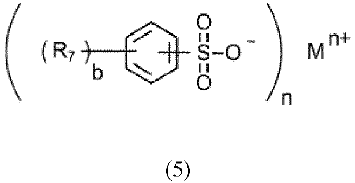 dans lesquelles
R₄, R₅, R₆ et R₇ représentent à chaque fois, indépendamment les uns des autres, un radical C₁₋C₆-alkyle,
Me et M représentent à chaque fois un métal,
a et n représentent 1, 2 ou 3,
b et w représentent des nombres entiers de 0 à 5 et
x et y représentent des nombres entiers de 0 à 4.

8. Masses de moulage selon l'une quelconque des revendications précédentes constituées par les composants (A), (B) et (C) et par
(D) 0,00% en poids à 20,00% en poids d'un ou de plusieurs absorbants des UV ;
(E) 0,00% en poids à 1,00% en poids d'un ou de plusieurs agents de démoulage ;
(F) 0,00% en poids à 0,20% en poids d'un ou de plusieurs stabilisants thermiques et/ou de traitement ;
(G) 0,00 à 10,00% en poids d'autres additifs, qui se distinguent des composants (B) à (F) ; et
(H) 0,00 à 40,00% en poids d'un ou de plusieurs (co)-polycarbonates, qui ne présentent pas de motifs siloxane.

9. Masses de moulage selon l'une quelconque des revendications précédentes, **caractérisées en ce que** le composant A est contenu en une quantité d'au moins 50% en poids dans les masses de moulage.

10. Masses de moulage selon l'une quelconque des revendications précédentes, **caractérisées en ce que** le cocondensat à blocs de polysiloxane-polycarbonate présente des blocs de polycarbonate à base de bisphénol A.

11. Masses de moulage selon l'une quelconque des revendications précédentes, **caractérisées en ce que** le cocondensat à blocs de polysiloxane-polycarbonate présente une ou plusieurs structures des formules (I), (II), (III) et (IV) : 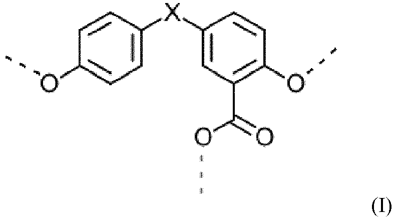 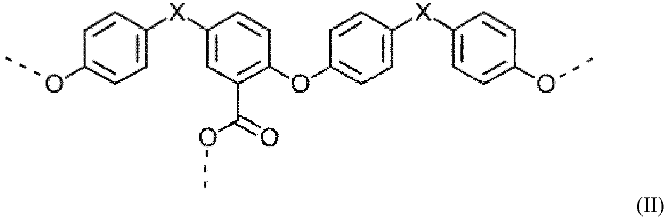 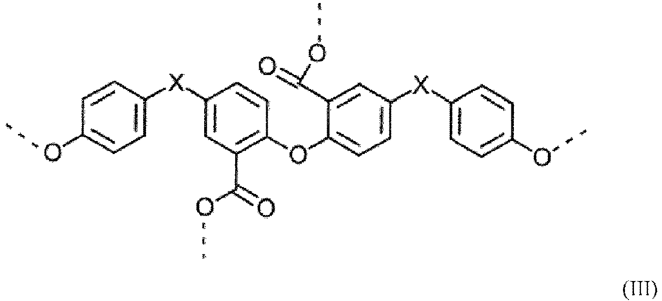 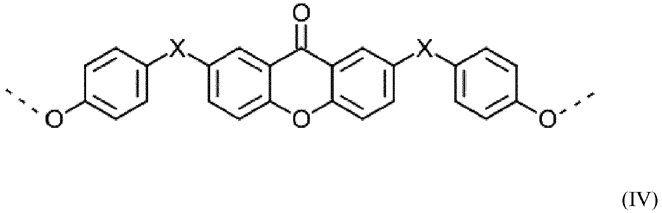 dans lesquelles
les cycles phényle sont non substitués ou monosubstitués ou disubstitués, indépendamment les uns des autres, par C₁-C₈-alkyle et/ou halogène,
X représente une simple liaison, C₁-C₆-alkylène, C₂-C₅-alkylidène ou C₅-C₆-cycloalkylidène et
les liaisons indiquées par --- dans les motifs structuraux (I) à (IV) font à chaque fois partie d'un groupe carboxyle.

12. Masses de moulage selon l'une quelconque des revendications précédentes, **caractérisées en ce que** la teneur en blocs siloxane de la structure (1) est de 2 à 20% en poids, par rapport au poids total des masses de moulage.
